# EUROPÄISCHE PATENTSCHRIFT

(11) **EP 2 825 451 B1**
(45) Veröffentlichungstag und Bekanntmachung des Hinweises auf die Patenterteilung: **28.12.2016**
(21) Anmeldenummer: 13703004.5
(22) Anmeldetag: 01.02.2013
(51) Int. Cl.: B64C 27/605

(54) **ROTORBLATTSTEUEREINRICHTUNG**
ROTOR BLADE CONTROL ARRANGEMENT
DISPOSITIF DE CONTRÔLE DE PALE DE ROTOR

(30) Priorität: 14.03.2012 DE 102012203978
(43) Veröffentlichungstag der Anmeldung: 21.01.2015
(73) Patentinhaber: ZF Friedrichshafen AG, 88046 Friedrichshafen (DE)
(72) Erfinder: GOETTE, Juergen, 34246 Vellmar (DE); ARNOLD, Uwe, 34132 Kassel (DE)
(86) Internationale Anmeldenummer: PCT/EP2013/051997
(87) Internationale Veröffentlichungsnummer: WO 2013/135431

(56) Entgegenhaltungen:
- DE-A1- 10 001 378
- DE-U1-202007 001 203
- FR-A1- 2 917 709

## Beschreibung

Die Erfindung betrifft eine Rotorblattsteuereinrichtung für einen Hubschrauber.

Bei einem Hubschrauber treibt eine Rotorwelle einen Rotorkopf an. An dem Rotorkopf sind Rotorblätter sowohl bezüglich ihrer Längsachse drehbar, als auch im Winkel zwischen deren Längsachse und der Drehachse der Rotorwelle schwenkbar angeordnet. Zur Steuerung der Flugbewegungen eines Hubschraubers ist eine Verstellung der Verdrehwinkel der Rotorblätter um ihre Längsachse erforderlich. Dies erfolgt mittels einer Taumelscheibe, welche von der Rotorwelle durchdrungen wird und gegenüber der Rotorwellenachse axial verschiebbar und neigbar ist.

Die ringförmige Taumelscheibe, nachfolgend als Taumelring bezeichnet, umfasst einen drehfest mit dem Hubschrauber gekoppelten ringförmigen Teil, nachfolgend als nichtdrehender Teil des Taumelrings bezeichnet, und eine an diesem drehbar um deren gemeinsame Mittelachse gelagerten und drehfest mit der Rotorwelle gekoppelten ringförmigen Teil, nachfolgend als drehender Teil des Taumelrings bezeichnet. Der nichtdrehende Teil des Taumelrings ist beispielsweise durch ein sphärisches Lager gelagert, welches eine Schrägstellung zulässt, und ist parallel, bzw. koaxial zur Rotorwellenachse verschiebbar.

Der drehende Teil des Taumelrings ist über ein Mitnehmergestänge drehfest mit der Rotorwelle gekoppelt und läuft somit mit der Drehzahl der Rotorwelle um. Zur Verstellung der Rotorblätter wirken Aktuatoren auf den nichtdrehenden Teil des Taumelrings und verschieben diesen längs der Rotorwellenachse bzw. Neigen diesen der Rotorwellenachse gegenüber, wobei sich diese Bewegungen je nach auszuführendem Flugmanöver auch überlagern können. Durch die drehbare Lagerung zwischen dem nichtdrehenden Teil des Taumelrings und dem drehenden Teil des Taumelrings werden diese Bewegungen auf den drehenden Teil des Taumelrings übertragen. Mittels der Verstellelemente, wie beispielsweise Steuerstangen, zwischen dem drehenden Teil des Taumelrings und den Rotorblättern werden diese Bewegungen in die gewünschten Bewegungen der Rotorblätter umgewandelt.

Die Aktuatoren werden üblicherweise hydraulisch betätigt, allerdings finden aufgrund von Nachteilen der hydraulischen Aktuatoren, wie beispielsweise zusätzliches Gewicht, Möglichkeit von Leckagen, hohen Wartungskosten sowie Brandgefahr und Toxizität zunehmend elektromechanische Aktuatoren Verwendung.

Aus der EP 2155553 B1 ist eine Hubschrauber-Rotorblattsteuerungsvorrichtung bekannt, welche einen Taumelring aufweist, die einen nichtdrehenden Teil des Taumelrings, d.h. eine sich nicht relativ zum Hubschrauber drehende ringförmige Platte, und einen drehenden Teil des Taumelrings umfasst. Der drehende Teil des Taumelrings ist koaxial zu dem drehfest mit dem Gehäuse bzw. dem Hubschrauber verbundenen nichtdrehenden Teil des Taumelrings angeordnet und dreht sich um eine gemeinsame Mittelachse beider Teile des Taumelrings. Zudem ist der drehende Teil des Taumelrings axial und radial an dem nichtdrehenden Teil des Taumelrings gelagert.

Die Verschiebung bzw. die Schiefstellung des nichtdrehenden Teil des Taumelrings wird hierbei von drei elektromechanischen Aktuatoren erzeugt, die mit drei gleichmäßig um den Umfang des ringförmigen nichtdrehenden Teils des Taumelrings angeordneten seitlichen, stangenartigen Verlängerungen des nichtdrehenden Teils des Taumelrings wirkverbunden sind. Die Verlängerungen sind ausgehend vom nichtdrehenden Teil des Taumelrings radial nach Außen gerichtet. Jeder Aktuator weist einen um eine Drehachse einer Steuerwelle des Aktuators schwenkbaren Hebel auf, welcher mittels eines Gleitelements mit der seitlichen Verlängerung des nichtdrehenden Teils des Taumelrings eine Gleitverbindung bildet. Die Hebel der jeweiligen Aktuatoren sind unabhängig von einander je nach gewünschter Schiefstellung oder Verschiebung des nichtdrehenden Teils des Taumelrings um einen bestimmten Verstellwinkel verschwenkbar. So nimmt für jeden Verstellwinkel der Steuerwellen bzw. der Hebel die zugehörige Anschlussstelle am nichtdrehenden Teil des Taumelrings einen exakt definierten Punkt im Raum ein. Auf ein sphärisches Lager zur Führung des nichtdrehenden Teils des Taumelrings kann damit verzichtet werden. Eine gesonderte axiale Führung des Taumelrings kann entfallen. Da der nichtdrehende Teil des Taumelrings mittels der Hebel, des Gleitelements und der Verlängerung mit dem Hubschrauber gekoppelt ist, sind keine Elemente, die ein Mitdrehen des nichtdrehenden Teils des Taumelrings verhindern sollen, erforderlich.

Die stangenartigen, sich radial nach außen vom nichtdrehenden Teil des Taumelrings erstreckenden seitlichen Verlängerungen und die damit radial außerhalb dessen angeordneten Aktuatoren beanspruchen nachteiligerweise einen großen radialen Bauraum. Das Koppelmittel zwischen Aktuator und nichtdrehendem Teil des Taumelrings ist mit zwei Bauteilen, nämlich dem Hebel und dem Gleitelement, aufwändig aufgebaut. Zudem erfordern die Gleit- und Gelenkverbindungen zwischen den Aktuatoren und den Verlängerungen einen hohen Wartungsaufwand, wie beispielsweise die Schmierung der gleitenden Teile sowie die Kontrolle des Schmierungszustandes der Gleitoberflächen. Darüber hinaus können sich die Spiele an den Gleit- und Gelenkverbindungen addieren, wodurch die Präzision der Verstellung beeinträchtigt wird.

Aus DE 100 01 378 A1, die als nächstliegender Stand der Technik betrachtet wird, ist eine Rotorblattsteuereinrichtung gemäß dem Oberbegriff des Patentanspruchs 1 bekannt.

Die der Erfindung zugrunde liegende Aufgabe ist es, in einfacher Weise eine wartungsarme Rotorblattsteuerungsvorrichtung mit möglichst geringem Bauraumbedarf und reduzierter Teilevielfalt zu schaffen.

Diese Aufgabe wird durch die Merkmale des Patentanspruches 1 gelöst.

Hierbei weist eine Rotorblattsteuereinrichtung für einen Hubschrauber einen Taumelring auf, welcher einen ringförmigen nichtdrehenden Teil, einen ringförmigen drehenden Teil, mindestens drei um eine Rotorwellenachse des Hubschraubers angeordnete Aktuatoren und ein Koppelmittel zwischen jedem Aktuator und dem nichtdrehenden Teil des Taumelrings umfasst. Die Aktuatoren sind mit einer an dem Hubschrauber fest angeordneten ortsfesten Komponente fest verbunden, wobei der Aktuator eine von diesem um eine Steuerachse verdrehbare Steuerwelle aufweist. Unter einer ortsfesten Komponente ist hierbei ein Bauteil zu verstehen, das fest mit dem Hubschrauber bzw. der Struktur des Hubschraubers verbunden ist. Der koaxial zum nichtdrehenden Teil des Taumelrings angeordnete drehende Teil des Taumelrings ist drehbar an dem nichtdrehenden Teil des Taumelrings gelagert, welcher aufgrund seiner Koppelung mit dem Aktuator und damit dem Hubschrauber drehfest mit diesem verbunden und nicht um die Rotorwellenachse drehbar ist.

Das Koppelmittel ist in einem Taumelringkoppelpunkt mit dem nichtdrehenden Teil des Taumelrings gekoppelt, so dass durch die Verdrehung der Steuerwelle der Taumelringkoppelpunkt über das Koppelmittel zumindest längs der Rotorwellenachse verschoben wird. Zudem umfasst das Koppelmittel mindestens einen Hebel, welcher drehfest mit der Steuerwelle verbunden ist. Die Steuerwellen der jeweiligen Aktuatoren sind unabhängig voneinander je nach gewünschter Schrägstellung oder Verschiebung des nichtdrehenden Teils des Taumelrings um einen bestimmten Verstellwinkel verdrehbar, so dass für jeden Verstellwinkel der Steuerwellen der zugehörige Taumelringkoppelpunkt einen exakt definierten Punkt im Raum einnimmt.

Das Koppelmittel weist zusätzlich zu dem Hebel ein in sich starres Schubglied auf, welches an einem ersten Ende in einem Drehgelenk um eine Schwenkachse schwenkbar mit dem Hebel verbunden ist. An einem zweiten Ende des Schubgliedes ist dieses in dem Taumelringkoppelpunkt mit dem nichtdrehenden Teil des Taumelrings in einem Kugelgelenk gekoppelt, so dass in dem Taumelringkoppelpunkt der nichtdrehende Teil des Taumelrings und das Schubglied in jede Richtung relativ zueinander neigbar sind. Hierdurch ist bei einer Verstellung der Steuerwelle eine Veränderung des radialen Abstandes der Schwenkachse durch die freie Beweglichkeit des Schubgliedes im Taumelringkoppelpunkt ausgleichbar.

Vorteilhafterweise sind der Aktuator und der nichtdrehenden Teils des Taumelrings durch das zweiteilige Koppelmittel gekoppelt, dessen Elemente um eine Drehachse gegeneinander und in einem Taumelringkoppelpunkt in jede Richtung gegenüber dem nichtdrehenden Teils des Taumelrings schwenkbar sind. Dies hat Vorteile hinsichtlich der Teilezahl des Koppelmittels. Zudem ist aufgrund der nur zwei Gelenke, welche zudem nur Schwenk- und keine Gleitbewegungen zulassen, der Wartungsaufwand bzw. der Verschleiß gering.

Vorteilhafte Ausgestaltungen der Erfindung ergeben sich aus den Unteransprüchen.

Das Koppelmittel umfasst gemäß der Erfindung einen weiteren Hebel, wobei beide Hebel, jeweils an einem ersten und einem zweiten Ende der Steuerwelle drehfest mit dieser verbunden sind und mit dem Schubglied das Drehgelenk bilden, und wobei die Schwenkachse parallel zur Steuerachse angeordnet
ist. Vorteilhafterweise bilden die beiden Hebel zusammen mit der Steuerwelle ein in sich drehstarres Element des Koppelmittels, welches eine symmetrische Abstützung des Schubgliedes und somit größere übertragbare Kräfte ermöglicht bzw. eine geringere Beanspruchung der Gelenklager erlaubt.

In dem Kugelgelenk im Taumelringkoppelpunkt ist es auch möglich, dass zusätzlich zur Neigbarkeit das Schubglied und das nichtdrehende Teil des Taumelrings in dem Taumelringkoppelpunkt gegeneinander verdrehbar sind.

In einer vorteilhaften Ausgestaltung ist das Schubglied als dreieckiger Rahmen ausgebildet, bei welchem an einer Ecke der Taumelringkoppelpunkt befindlich ist und durch dessen zweite und dritte Ecke die Schwenkachse verläuft. Hierdurch wird eine stabile Abstützung der Verstellkräfte auf den Hebeln ermöglicht. Zudem weist das derart gestaltete Schubglied bei hoher Steifigkeit ein geringes Gewicht und Raumbedarf auf.

Außerdem ist es möglich, dass der Taumelringkoppelpunkt und die Schwenkachse axial bezüglich der Rotorwellenachse voneinander beanstandet sind.

Eine weitere Ausgestaltung sieht vor, dass die Aktuatoren und das Koppelmittel radial zur Rotorwellenachse außerhalb des nichtdrehenden Teils des Taumelrings angeordnet sind.

Alternativ hierzu ist es möglich, dass die Aktuatoren innerhalb des nichtdrehenden Teils des Taumelrings angeordnet sind. Hierdurch ist vorteilhafterweise der Bauraumbedarf in radialer Richtung ausgehend von Rotorwellenachse gering.

Schließlich wird es als vorteilhaft beurteilt, dass die Schwenkachse senkrecht zur Rotorwellenachse verläuft und von dieser beabstandet ist, wobei bei einem bestimmten Verstellwinkel des Hebelpaares die Schwenkachse radial von der Rotorwellenachse aus in Richtung des Taumelringkoppelpunktes gesehen den gleichen radialen Abstand von der Rotorwellenachse aufweist wie der Taumelringkoppelpunkt.

Hierdurch liegt das Schubglied im Wesentlichen parallel zur Rotorwellenachse, wodurch vorteilhafterweise die Aktuatoren in radialer Richtung bezogen auf die Rotorwellenachse dicht an diese heranrücken können.

Außerdem kann vorgesehen sein, dass der radiale Abstand der Steuerachse 8 von der Rotorwellenachse größer ist als der Abstand der Schwenkachse von der Rotorwellenachse.

In einer Ausgestaltung der Erfindung sind die Aktuatoren als Elektromotoren ausgebildet.

Alternativ hierzu können die Aktuatoren als hydraulische Schwenkmotoren ausgebildet sein.

Bevorzugt weisen die Aktuatoren eine innere Redundanz auf, wodurch die Betriebssicherheit erhöht wird.

Vorteilhafterweise ist es möglich, dass ein Hubschrauber eine Rotorblattsteuereinrichtung nach einer der möglichen Ausgestaltungen aufweist.

Ein Ausführungsbeispiel der Erfindung ist in der Zeichnung dargestellt und wird im Folgenden näher beschrieben.

Es zeigen:
- Fig. 1: eine perspektivische Ansicht der erfindungsgemäßen Rotorblattsteuereinrichtung und
- Fig. 2: eine Draufsicht auf die erfindungsgemäße Rotorblattsteuereinrichtung.

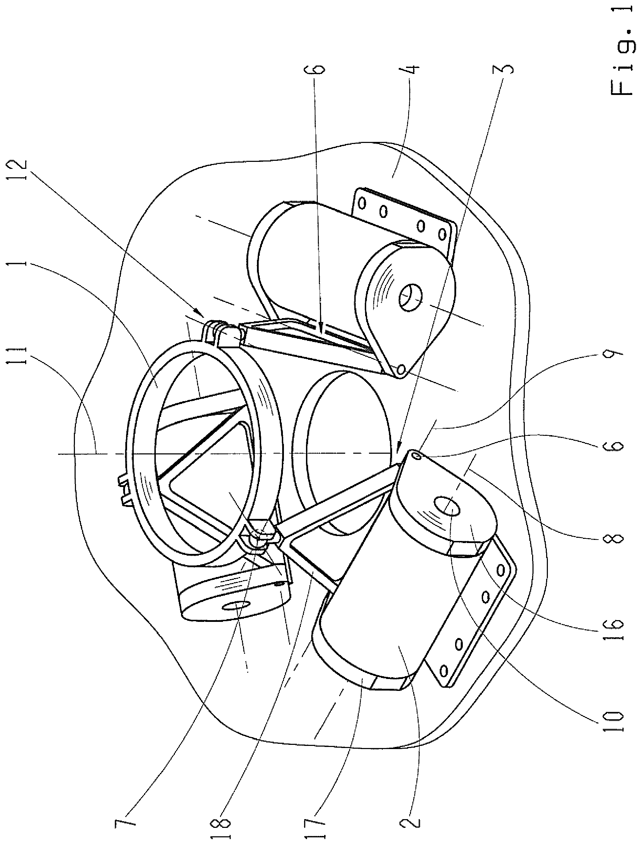

Fig. 1 zeigt eine vereinfachte perspektivische Darstellung einer erfindungsgemäßen Rotorblattsteuereinrichtung in Einbaulage. Die Rotorblattsteuereinrichtung umfasst einen Taumelring und eine Aktuatorik zu deren Verstellung. Von dem einen drehenden Teil und einen nichtdrehenden Teil umfassenden Taumelring ist nur der nichtdrehende Teil des Taumelrings 1 dargestellt, an welchem der drehende Teil des Taumelrings um die gemeinsame Mittelachse drehbar gelagert ist. Nicht zur Rotorblattsteuereinrichtung gehört eine ortsfeste Komponente 4, worunter hier beispielsweise ein Bauteil des Gesamtsystems Hubschrauber zu verstehen ist, welches relativ zu der Struktur des Hubschraubers feststehend, bzw. fest mit dieser verbunden ist. In einem zentralen Durchlass der ortsfesten Komponente 4 ist eine nicht dargestellte Rotorwelle angeordnet, welche sich, von einem nicht dargestellten Antriebsmotor angetrieben, um eine Rotorwellenachse 11 dreht. Die Rotorwellenachse 11 verläuft in Einbaulage, bzw. in einem stehenden Hubschrauber im Wesentlichen vertikal. An der ortsfesten Komponente 4 sind drei Aktuatoren 2 zur Schiefstellung des nichtdrehenden Teils des Taumelrings 1 relativ zur Rotorwellenachse 11 oder zur Verschiebung des nichtdrehenden Teils des Taumelrings 1 längs der Rotorwellenachse 11, bzw. einer Überlagerung beider Bewegungen, fest angeordnet. Die drei Aktuatoren 2 sind hierbei in einer vorteilhaften Ausgestaltung mit gleicher Teilung um die Rotorwellenachse 11 herum verteilt. Zur Übertragung der Bewegung von den Aktuatoren 2 auf den nichtdrehenden Teils des Taumelrings 1 ist pro Aktuator ein Koppelmittel 3 vorgesehen, welches zwischen dem jeweiligen Aktuator 2 und dem nichtdrehenden Teil des Taumelrings 1 angeordnet ist.

Die drei Aktuatoren 2 und die zugehörigen Koppelmittel 3 sind gleich. Aus diesem Grund werden nachfolgend auch gleiche Komponenten der drei verschiedenen Anordnungen mit gleichen Bezugszeichen bezeichnet. Im vorliegenden Beispiel sind die Aktuatoren 2 als elektromechanische Aktuatoren ausgebildet sind, welche um eine Steuerachse 8 elektromagnetisch verdrehbare Steuerwellen 10 aufweisen. Die elektromechanischen Aktuatoren können beispielsweise als elektrische Servomotoren mit einem Getriebe zur Reduktion der Servomotorendrehzahl auf die Bewegung der Steuerwelle ausgebildet sein, mit welchen es möglich ist, die Steuerwelle 10 um einen Verstellwinkel zu verdrehen. Alternativ hierzu wären auch hydraulische Aktuatoren, beispielsweise hydraulische Schwenkmotoren, einsetzbar.

Jedes Koppelmittel 3 umfasst zwei Hebel 16 und 17 und ein Schubglied 18. Die Steuerwellen 10 stehen an beiden Enden aus dem Aktuator 2 hervor. Die Hebel 16 und 17 sind jeweils an einem der beiden Enden der Steuerwellle 10 drehfest mit dieser verbunden und gleichgerichtet, d.h. nicht bezüglich der Steuerachse 8 zueinander verdreht, so dass diese ein Hebelpaar bilden. Das Schubglied 18 ist in dem Ausführungsbeispiel als dreieckiger Rahmen ausgebildet. Die Enden der Hebel 16 und 17 und zwei Ecken des Schubglieds 18 bilden ein Drehgelenk 6, dessen Drehachse eine Schwenkachse 9 ist. Die Schwenkachse 9 verläuft parallel zur Steuerachse 8. Das Schubglied 18 ist mit einer dritten Ecke in dem Taumelringkoppelpunkt 7 mit dem nichtdrehenden Teil des Taumelrings 1 derart gekoppelt, so dass der nichtdrehende Teil des Taumelrings 1 und das Schubglied 18 in jede Richtung relativ zueinander neigbar sind. Somit bilden das Schubglied 18 und der nichtdrehende Teil des Taumelrings 1 in dem Taumelringkoppelpunkt 7 ein Kugelgelenk 12.

Bei einer einseitig aus dem Aktuator 2 hervorstehenden Steuerwelle 10 sind die Funktionen der Rotorblattsteuereinrichtung auch mit nur einem Hebel realisierbar, wobei allerdings durch eine asymmetrische Krafteinleitung in den Aktuator die Bauteilbeanspruchung erhöhen würde. Darüber hinaus wir das Drehgelenk eine deutlich geringere Breite aufweisen als bei einer Ausführung mit zwei Hebeln, wodurch die Belastung des Drehgelenks und damit die Bauteilbelastung steigt.

Die drei Aktuatoren 2 mit den zugehörigen Koppelmitteln 3 sind mit gleicher Teilung um den nichtdrehenden Teil des Taumelrings 1 angeordnet und fest mir der ortsfesten Komponente 4 verbunden. In radialer Richtung ausgehend von der Rotorwellenachse 11 sind die Aktuatoren 2 außerhalb des nichtdrehenden Teils des Taumelrings 1 angeordnet.

Der Taumelringkoppelpunkt 7 und die Schwenkachse 9 sind axial bezüglich der Rotorwellenachse 11 voneinander beabstandet. Die Schwenkachse 9 ist radial von der Rotorwellenachse 11 beabstandet. In einer Projektionsebene, in welcher die Rotorwellenachse 11 liegt und zu der die betreffende Schwenkachse 9 parallel verläuft, schneiden sich die Rotorwellenachse 11 und die Schwenkachse 9 unter einem rechten Winkel. Der radiale Abstand von der Rotorwellenachse 11 der Steuerachse 8 ist größer als derer der Schwenkachse 9 von der Rotorwellenachse 8.

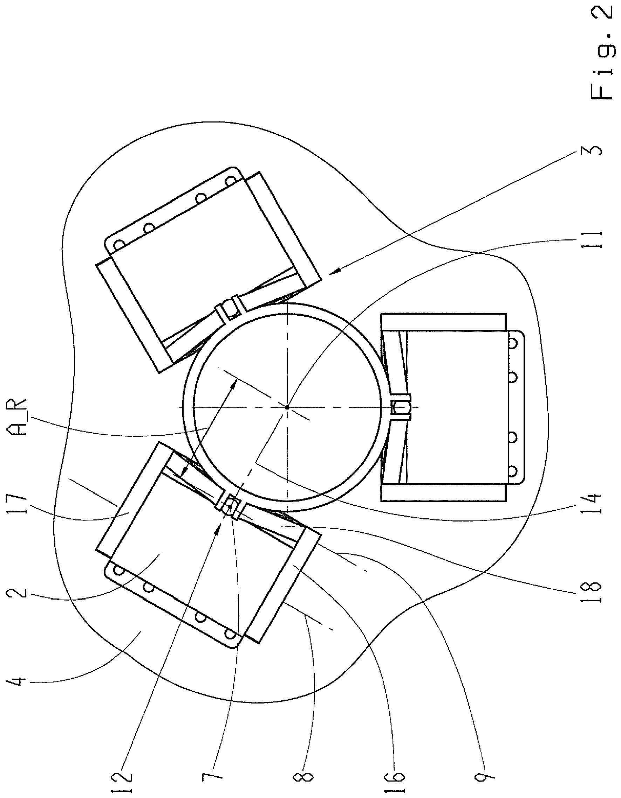

Bei einer Verdrehung der Steuerwelle 10 werden auch die Hebel 16 und 17 um die Steuerachse 8 verdreht, so dass sich ein radialer Abstand A_R der durch die Hebel 16 und 17 verlaufenden Schwenkachse 9 von der Rotorwellenachse 11 ändert. Bei einem bestimmten Verstellwinkel der Steuerwelle 10 ist der kürzeste radiale Abstand A_R der Schwenkachse 9 von der Rotorwellenachse 11 so groß wie der radiale Abstand des Taumelringkoppelpunkts 7 von der Rotorwellenachse 11, wie der Darstellung in Fig. 2 zu entnehmen ist. Eine Abstandslinie 14 kürzesten radialen Abstandes der Schwenkachse 9 von der Rotorwellenachse 11 verläuft durch den Taumelringkoppelpunkt 7. Das heißt, dass bei einem bestimmten Verstellwinkel der Hebel 16 und 17 die Schwenkachse 9 radial von der Rotorwellenachse 11 aus in Richtung des Taumelringkoppelpunktes 7 gesehen den gleichen radialen Abstand A_R von der Rotorwellenachse 11 aufweist wie der Taumelringkoppelpunkt 7.

Da die Hebel 16 und 17 in dem Ausführungsbeispiel nur in einem Bereich eines Verstellwinkels von weniger als 180° bewegbar ist, weichen die radialen Positionen, bezogen auf die Rotorwellenachse 11, von Schwenkachse 9 und Taumelringkoppelpunkt 7 je nach Verstellwinkel der Steuerwelle 10 weniger als der Abstand der zueinander parallel verlaufenden Steuerachse 8 und der Schwenkachse 9 voneinander ab.

Das Schubglied 18 weist in dem dargestellten Beispiel somit in Einbaulage der Rotorblattsteuereinrichtung im Wesentlichen senkrecht nach unten, bzw. eine gedachte Verbindungslinie zwischen dem Taumelringkoppelpunkt 7 und der Schwenkachse 9, welche die Schwenkachse 9 im rechten Winkel schneidet, verläuft im Wesentlichen parallel zur Rotorwellenachse 11. Hierdurch ist eine Anordnung der Aktuatoren 2 möglich, welche vorteilhafterweise einen möglichst geringen radialen Bauraum, bezogen auf die Rotorwellenachse 11, beansprucht.

Sind nun wie in Fig. 1 und Fig. 2 dargestellt alle drei Aktuatoren 2 so eingestellt, dass sich alle Steuerwellen 10 bzw. die an ihnen angeordneten Hebel 16 und 17 in der gleichen Stellung befinden, ist der nichtdrehende Teil des Taumelrings 1 konzentrisch zur Rotorwellenachse 11 ausgerichtet. Sollen alle Rotorblätter um den gleichen Verdrehwinkel um ihre Längsachse verdreht werden, so müssen die Steuerachsen 10 aller drei Aktuatoren um den gleichen Winkel Verdreht werden. Hierdurch wird der nichtdrehende Teil des Taumelrings 1 längs der Rotorwellenachse 11 verschoben, wobei dieser in seiner Lage konzentrisch zu Rotorwellenachse 11 bleibt.

Soll sich der Verdrehwinkel eines Rotorblatts während einer Umdrehung der Rotorwellenachse ändern, muss der nichtdrehende Teil des Taumelrings in einem Winkel zur Rotorwellenachse geneigt werden, so dass die Mittelachse des nichtdrehenden Teils des Taumelrings bzw. die Rotationsachse des nicht gezeigten drehenden Teils des Taumelrings und die Rotorwellenachse 11 nicht mehr konzentrisch sind.

Um eine Schiefstellung des nichtdrehenden Teils des Taumelrings 1 zu bewirken, muss mindestens eine der drei Steuerwellen 10 bzw. die drehfest an ihr angeordneten Hebel 16 und 17 eine andere Stellung einnehmen, als die Hebel der übrigen Aktuatoren. Hierdurch wird über das Drehgelenk 6 das Schubglied 18 der Taumelringkoppelpunkt 7 längs der Rotorwellenachse 11 verschoben, wobei das Schubglied 18 um die Schwenkachse 9 schwenkt und auch im Taumelringkoppelpunkt 7 seine Neigung zum nichtdrehenden Teils des Taumelrings 1 verändert. Diese Bewegung des einen Taumelringkoppelpunkts 7 wäre durch ein nur um eine Drehachse wirkendes Gelenk im Taumelringkoppelpunkt 7 möglich, allerdings würde dann die Schiefstellung des nichtdrehenden Teils des Taumelrings 1 an den Koppelmitteln der beiden anderen Aktuatoren ein Biegemoment erzeugen und damit zu einer Verspannung bzw. zum Klemmen der Anordnung führen. Durch die Freiheitsgrade des Kugelgelenks 12 im Taumelringkoppelpunkt 7, welches eine Verschwenkung von Schubglied 18 und nichtdrehendem Teil des Taumelrings 1 zueinander in jede beliebige Richtung erlaubt, ist jedoch eine beliebige Schiefstellung des nichtdrehenden Teils des Taumelrings 1 zur Rotorwellenachse 11 möglich.

Die Verschiebung des nichtdrehenden Teils des Taumelrings 1 in koaxialer Lage zur Rotorwellenachse 11 in deren Längsrichtung und die Schiefstellung des nichtdrehenden Teils des Taumelrings 1 zur Rotorwellenachse 11 ist überlagerbar. Hierbei sind die Steuerwellen 10 aller Aktuatoren 2 unabhängig voneinander verstellbar. Trotz der Freiheitsgrade der Steuerwellen 10, der Drehgelenke 6 und der Taumelringkoppelpunkte 7 bzw. der Kugelgelenke 12 sind aufgrund der Koppelung der drei Aktuatoren 2 über die zugehörigen Koppelmittel 3 und den nichtdrehenden Teil des Taumelrings 1 für jeden Verdrehwinkel der Steuerwellen 10 die Lage der Taumelringkoppelpunkte 7 im Raum eindeutig festgelegt.

### Bezugszeichen

- 1: nichtdrehender Teil des Taumelrings
- 2: Aktuator
- 3: Koppelmittel
- 4: ortsfeste Komponente
- 6: Drehgelenk
- 7: Taumelringkoppelpunkt
- 8: Steuerachse
- 9: Schwenkachse
- 10: Steuerwelle
- 11: Rotorwellenachse
- 12: Kugelgelenk
- 14: Abstandslinie
- 16: Hebel
- 17: Hebel
- 18: Schubglied
- A_R: radialer Abstand der Schwenkachse von der Rotorwellenachse

## Patentansprüche

1. Rotorblattsteuereinrichtung für einen Hubschrauber, umfassend einen Taumelring, der Taumelring umfassend einen nichtdrehenden Teil des Taumelrings (1), einen drehenden Teil des Taumelrings, mindestens drei um eine Rotorwellenachse (11) des Hubschraubers angeordnete Aktuatoren (2), einem Koppelmittel (3) zwischen Aktuator (2) und nichtdrehendem Teil des Taumelrings (1), wobei die Aktuatoren (2) mit einer relativ zu dem Hubschrauber fest angeordneten ortsfesten Komponente (4) fest verbunden sind, wobei der Aktuator (2) eine von diesem um eine Steuerachse (8) verdrehbare Steuerwelle (10) aufweist, und wobei das Koppelmittel (3) mindestens einen Hebel (16) umfasst, welcher drehfest mit der Steuerwelle (10) verbunden ist, und wobei das Koppelmittel (3) in einem Taumelringkoppelpunkt (7) mit dem nichtdrehenden Teil des Taumelrings (1) gekoppelt ist, so dass durch die Verdrehung der Steuerwelle (10) der Taumelringkoppelpunkt (7) über das Koppelmittel (3) zumindest längs der Rotorwellenachse (11) verschoben wird, wobei die Steuerwellen (10) der jeweiligen Aktuatoren (2) unabhängig voneinander je nach gewünschter Schrägstellung oder Verschiebung des nichtdrehenden Teils des Taumelrings (1) um einen bestimmten Verstellwinkel verdrehbar sind, so dass für jeden Verstellwinkel der Steuerwellen (10) der zugehörige Taumelringkoppelpunkt (7) einen exakt definierten Punkt im Raum einnimmt, wobei das Koppelmittel (3) zusätzlich zu dem Hebel (16) ein Schubglied (18) aufweist, welches an einem ersten Ende in einem Drehgelenk (6) um eine Schwenkachse (9) schwenkbar mit dem Hebel (16) verbunden ist, und an einem zweiten Ende in dem Taumelringkoppelpunkt (7) mit dem nichtdrehenden Teil des Taumelrings (1) in einem Kugelgelenk (12) gekoppelt ist, so dass in dem Taumelringkoppelpunkt (7) der nichtdrehende Teil des Taumelrings (1) und das Schubglied (18) in jede Richtung relativ zueinander neigbar sind, **dadurch gekennzeichnet, dass** das Koppelmittel (3) einen weiteren Hebel (17) umfasst, wobei beide Hebel (16, 17) jeweils an einem ersten und einem zweiten Ende der Steuerwelle (10) drehfest mit dieser verbunden sind und mit dem Schubglied (18) das Drehgelenk (6) bilden, und wobei die Schwenkachse (9) parallel zur Steuerachse (8) angeordnet ist.

2. Rotorblattsteuereinrichtung nach Anspruch 1, **dadurch gekennzeichnet, dass** das Schubglied (18) als dreieckiger Rahmen ausgebildet ist, bei welchem an einer Ecke der Taumelringkoppelpunkt (7) befindlich ist und durch dessen zweite und dritte Ecke die Schwenkachse (9) verläuft.

3. Rotorblattsteuereinrichtung nach einem der vorangegangenen Ansprüche, **dadurch gekennzeichnet, dass** der Taumelringkoppelpunkt (7) und die Schwenkachse (9) axial bezüglich der Rotorwellenachse (11) voneinander beanstandet sind.

4. Rotorblattsteuereinrichtung nach einem der vorangegangenen Ansprüche, **dadurch gekennzeichnet, dass** die Aktuatoren (2) und das Koppelmittel (3) radial zur Rotorwellenachse (11) außerhalb des nichtdrehenden Teils des Taumelrings (1) angeordnet sind.

5. Rotorblattsteuereinrichtung nach Anspruch 3 oder 4, **dadurch gekennzeichnet, dass** die Schwenkachse (9) senkrecht zur Rotorwellenachse (11) verläuft und von dieser beabstandet ist, wobei bei einem bestimmten Verstellwinkel der Hebel (16, 17) die Schwenkachse (9) radial von der Rotorwellenachse (11) aus in Richtung des Taumelringkoppelpunktes (7) gesehen den gleichen radialen Abstand von der Rotorwellenachse (11) aufweist wie der Taumelringkoppelpunkt (7).

6. Rotorblattsteuereinrichtung nach Anspruch 1, 4 oder 5, **dadurch gekennzeichnet, dass** der radiale Abstand der Steuerachse (8) von der Rotorwellenachse (11) größer ist als der Abstand der Schwenkachse (9) von der Rotorwellenachse (11).

7. Rotorblattsteuereinrichtung nach einem der Ansprüche 1 bis 4, **dadurch gekennzeichnet, dass** die Aktuatoren (2) als Elektromotoren ausgebildet sind.

8. Rotorblattsteuereinrichtung nach einem der Ansprüche 1 bis 4, **dadurch gekennzeichnet, dass** die Aktuatoren (2) als hydraulische Schwenkmotoren ausgebildet sind.

9. Rotorblattsteuereinrichtung nach Anspruch 7 oder 8, **dadurch gekennzeichnet, dass** die Aktuatoren (2) eine innere Redundanz aufweisen.

10. Hubschrauber mit einer Rotorblattsteuereinrichtung nach einem der vorangegangenen Ansprüche.

## Claims

1. Rotor blade control device for a helicopter, comprising a swashplate, the swashplate comprising a non-rotating part of the swashplate (1), a rotating part of the swashplate, at least three actuators (2) arranged about a rotor shaft axis (11) of the helicopter, a coupling member (3) between the actuator (2) and the non-rotating part of the swashplate (1), wherein the actuators (2) are securely connected to a positionally fixed component (4) that is arranged fixed with respect to the helicopter, wherein the actuator (2) has a control shaft (10) that can be rotated thereby about a control axis (8), and wherein the coupling member (3) comprises at least one lever (16) which is connected in a rotationally fixed manner to the control shaft (10), and wherein the coupling member (3) is coupled to the non-rotating part of the swashplate (1) at a swashplate coupling point (7), such that, as a consequence of the rotation of the control shaft (10), the swashplate coupling point (7) is displaced by means of the coupling member (3) at least along the rotor shaft axis (11), wherein the control shafts (10) of the respective actuators (2) can be rotated, independently of one another, by a determined displacement angle depending on the desired tilting or displacement of the non-rotating part of the swashplate (1), such that, for every displacement angle of the control shafts (10), the associated swashplate coupling point (7) adopts an exactly defined point in space, wherein the coupling member (3) has, in addition to the lever (16), a displacement member (18) which is connected at a first end to the lever (16) so as to be able to pivot, in a hinge (6), about a pivot axis (9), and is coupled at a second end, in the swashplate coupling point (7), to the non-rotating part of the swashplate (1), in a ball joint (12), such that in the swashplate coupling point (7) the non-rotating part of the swashplate (1) and the displacement member (18) can be inclined in any direction relative to one another, **characterized in that** the coupling member (3) has a further lever (17), wherein the two levers (16, 17) are respectively connected at a first and a second end of the control shaft (10) so as to be fixed in rotation therewith and, with the displacement member (18), form the hinge (6), and wherein the pivot axis (9) is arranged parallel to the control axis (8).

2. Rotor blade control device according to Claim 1, **characterized in that** the displacement member (18) is designed as a triangular frame, at one corner of which is located the swashplate coupling point (7), the pivot axis (9) running through its second and third corners.

3. Rotor blade control device according to either of the preceding claims, **characterized in that** the swashplate coupling point (7) and the pivot axis (9) are spaced apart from one another axially with respect to the rotor shaft axis (11).

4. Rotor blade control device according to one of the preceding claims, **characterized in that** the actuators (2) and the coupling member (3) are arranged radially outside the non-rotating part of the swashplate (1), with respect to the rotor shaft axis (11).

5. Rotor blade control device according to Claim 3 or 4, **characterized in that** the pivot axis (9) runs perpendicular to the rotor shaft axis (11) and is spaced apart therefrom, wherein, at a certain displacement angle of the levers (16, 17), the pivot axis (9), as seen radially from the rotor shaft axis (11) in the direction of the swashplate coupling point (7), is at the same radial distance from the rotor shaft axis (11) as the swashplate coupling point (7).

6. Rotor blade control device according to Claim 1, 4 or 5, **characterized in that** the radial distance between the control axis (8) and the rotor shaft axis (11) is greater than the distance between the pivot axis (9) and the rotor shaft axis (11).

7. Rotor blade control device according to one of Claims 1 to 4, **characterized in that** the actuators (2) take the form of electric motors.

8. Rotor blade control device according to one of Claims 1 to 4, **characterized in that** the actuators (2) take the form of hydraulic oscillating motors.

9. Rotor blade control device according to Claim 7 or 8, **characterized in that** the actuators (2) have an internal redundancy.

10. Helicopter having a rotor blade control device according to one of the preceding claims.

## Revendications

1. Dispositif de contrôle de pale de rotor pour un hélicoptère, comprenant une bague oscillante, la bague oscillante comprenant une partie non tournante de la bague oscillante (1), une partie tournante de la bague oscillante, au moins trois actionneurs (2) disposés autour de l'axe d'arbre de rotor (11) de l'hélicoptère, un moyen de couplage (3) entre l'actionneur (2) et la partie non tournante de la bague oscillante (1), les actionneurs (2) étant reliés fixement à un composant (4) fixe sur place disposé fixement par rapport à l'hélicoptère, l'actionneur (2) comportant un arbre de commande (10) pouvant être tourné par lui autour d'un axe de commande (8) et le moyen de couplage (3) comprenant au moins un levier (16) relié solidairement en rotation à l'arbre de commande (10) et le moyen de couplage (3) étant couplé, en un point de couplage de bague oscillante (7), à la partie non tournante de la bague oscillante (1), de sorte que la rotation de l'arbre de commande (10) permet de déplacer le point de couplage de bague oscillante (7) via le moyen de couplage (3) au moins dans le sens de la longueur de l'axe d'arbre de rotor (11), les arbres de commande (10) des actionneurs (2) respectifs pouvant tourner indépendamment les uns des autres respectivement suivant la position inclinée souhaitée ou le déplacement de la partie non tournante de la bague oscillante (1) selon un angle de réglage défini, de sorte que pour chaque angle de réglage des arbres de commande (10), le point de couplage de bague oscillante (7) associé prend un point exactement défini dans l'espace, le moyen de couplage (3) comportant en sus du levier (16) un élément de poussée (18) relié au levier (16) de façon à pouvoir pivoter autour d'un axe de pivotement (9), au niveau d'une première extrémité prévue dans une articulation sur pivot (6), et couplé, au niveau d'une deuxième extrémité prévue dans le point de couplage de bague oscillante (7), à la partie non tournante de la bague oscillante (1), dans une articulation sphérique (12), de sorte que dans le point de couplage de bague oscillante (7), la partie non tournante de la bague oscillante (1) et l'élément de poussée (18) peuvent être inclinés l'un par rapport à l'autre dans chaque direction, **caractérisé en ce que** le moyen de couplage (3) comprend un levier (17) supplémentaire, les deux leviers (16, 17) étant respectivement reliés, au niveau d'une première et d'une deuxième extrémité de l'arbre de commande (10), solidairement en rotation audit arbre et formant, avec l'élément de poussée (18), l'articulation sur pivot (6) et l'axe de pivotement (9) étant disposé parallèlement à l'axe de commande (8).

2. Dispositif de contrôle de pale de rotor selon la revendication 1, **caractérisé en ce que** l'élément de poussée (18) est réalisé sous la forme d'un cadre triangulaire dans lequel l'axe de pivotement (9) se trouve dans un coin du point de couplage de bague oscillante (7) et s'étend à travers son deuxième et troisième coin.

3. Dispositif de contrôle de pale de rotor selon l'une quelconque des revendications précédentes, **caractérisé en ce que** le point de couplage de bague oscillante (7) et l'axe de pivotement (9) se placent à une certaine distance axiale l'un de l'autre dans le plan axial par rapport à l'axe d'arbre de rotor (11).

4. Dispositif de contrôle de pale de rotor selon l'une quelconque des revendications précédentes, **caractérisé en ce que** les actionneurs (2) et le moyen de couplage (3) sont disposés dans le plan radial par rapport à l'axe d'arbre de rotor (11), à l'extérieur de la partie non tournante de la bague oscillante (1).

5. Dispositif de contrôle de pale de rotor selon la revendication 3 ou 4, **caractérisé en ce que** l'axe de pivotement (9) s'étend perpendiculairement à l'axe d'arbre de rotor (11) et est placé à une certaine distance de lui, sachant qu'en présence d'un angle de réglage défini des leviers (16, 17), l'axe de pivotement (9) présente, dans le plan radial partant de l'axe d'arbre de rotor (11) en direction du point de couplage de bague oscillante (7), la même distance radiale par rapport à l'axe d'arbre de rotor (11) que le point de couplage de bague oscillante (7).

6. Dispositif de contrôle de pale de rotor selon la revendication 1, 4 ou 5, **caractérisé en ce que** la distance radiale de l'axe de commande (8) par rapport à l'axe d'arbre de rotor (11) est plus grande que la distance de l'axe de pivotement (9) par rapport à l'axe d'arbre de rotor (11).

7. Dispositif de contrôle de pale de rotor selon l'une quelconque des revendications 1 à 4, **caractérisé en ce que** les actionneurs (2) sont réalisés sous la forme de moteurs électriques.

8. Dispositif de contrôle de pale de rotor selon l'une quelconque des revendications 1 à 4, **caractérisé en ce que** les actionneurs (2) sont réalisés sous la forme de moteurs oscillants hydrauliques.

9. Dispositif de contrôle de pale de rotor selon la revendication 7 ou 8, **caractérisé en ce que** les actionneurs (2) présentent une redondance intérieure.

10. Hélicoptère équipé d'un dispositif de contrôle de pale de rotor selon l'une quelconque des revendications précédentes.
